# EUROPEAN PATENT SPECIFICATION

(11) **EP 2 174 542 B1**
(45) Date of publication and mention of the grant of the patent: **21.11.2012**
(21) Application number: 09172727.1
(22) Date of filing: 09.10.2009
(51) Int. Cl.: A01K 73/12, A01K 75/00, F16B 45/02

(54) **Hardened purse ring**
Gehärteter Gleitring
Anneau de coulisse renforcé

(30) Priority: 13.10.2008 US 250260
(43) Date of publication of application: 14.04.2010
(73) Proprietor: Gois, John F., La Mesa CA California 91941 (US)
(72) Inventor: Gois, John F., La Mesa CA California 91941 (US)
(74) Representative: Curley, Donnacha John

(56) References cited:
- US-A- 5 287 645
- US-A- 5 505 013

## Description

### FIELD OF THE INVENTION

The present invention pertains to seine equipment used in fishing operations. More specifically, the present invention pertains to purse rings which connect the fishing net to a pursing cable or purse line. The present invention is particularly, but not exclusively, useful in purse seiner operations wherein a purse line is drawn through a plurality of purse rings to close the seine and retrieve fish caught in the seine.

### BACKGROUND OF THE INVENTION

In commercial fishing operations, the method of fishing known as purse seine fishing is an effective and widely used technique. The method is conceptually simple. A seine, or net, is fitted at one end with buoyant devices (e.g. floats) and at the other end with weighting devices (e.g. sinkers). As the seine is deployed in a rough circle, the weighted end of the seine submerges to cause the seine to hang essentially vertically in the water. To provide for seine retrieval, a purse line is attached to the weighted end of the seine by a plurality of connectors, known as purse rings. As the purse line is tightened by fishermen on the fishing vessel, the weighted end of the seine is drawn together to enclose fish within the seine. The weighted end, now pursed, is raised and drawn toward the fishing vessel. Simultaneously, support craft retrieve and draw in the buoyed end of the seine. In this way, fish are trapped in the seine as it is retrieved.

During seine retrieval, the purse line, through its interaction with the purse rings, is used to both purse the seine and draw it toward the fishing vessel. As can be easily imagined, the forces which are generated between the purse line and the purse ring during these operations can be very substantial. Indeed, these forces can cause significant frictional erosion and wear on both the purse line and the surface of the purse rings. The eventual results are a complete failure of the purse rings and a fraying of the purse line which causes the purse line to snag on the netting. In either event, the operation is compromised and the purse rings may need to be replaced.

Recent developments in the commercial fishing area have compounded the problem of purse ring wear because many of the now preferred fishing grounds are located in the Western Pacific Ocean. It happens that purse seiner operations in the Western Pacific require deeper deployment of the seines than thermoclines in the Western Pacific that often result in deeper schooling of food fish. Consequently, with the deployment of seines, the forces required to retrieve the seines (e.g. forces between the purse line and the purse rings) are greatly increased. As a further consequence, standard purse rings, such as are used in other oceans of the world, are generally inadequate for use in the Western Pacific.

In light of the foregoing, the present invention recognizes the need to significantly reduce purse ring wear to permit efficient seiner operations at greater depths in the ocean and to prolong the useful life of purse rings used in seiner operations regardless of depth. It is therefore an object of the present invention to provide a purse ring for use in purse seiner fishing operations which has a relatively long period of usefulness. It is a further object of the present invention to provide a purse ring for seiner operations that reduces frictional wear on the purse ring when a purse line is drawn through it during seine retrieval operations. It is yet a further object of the present invention to provide a purse ring for use in purse seiner operations that facilitates purse line insertion into or withdrawal from the purse ring. Another object of the present invention is to provide a purse ring for purse seiner fishing operations which is easy to install and use, relatively easy to manufacture, and comparatively cost-effective.

US 5287645 discloses a purse ring for interconnecting a purse seine to a purse line has a frame with a roller mounted across the frame. The roller permits rolling engagement with the purse line as the purse line is retrieved during seiner operations. The frame of the roller is formed with a pivotable cable release arm to permit insertion or withdrawal of the purse line. A crossbar is also attached across the frame which forms an aperture for connecting the purse ring to a bridle line or some other means of connection to the seine.

US 5505013 discloses a purse ring for interconnecting a purse seine to a purse line has a frame with a first roller mounted across the frame, creating a purse line passageway. The first roller permits rolling engagement with the purse line as the purse line is retrieved during seiner operations. The frame of the roller is formed with a pivotable cable release arm to permit insertion or withdrawal of the purse line from the purse line passageway. A crossbar can also be attached across the frame which forms a bridle line passageway for connecting the purse ring to a bridle line or some other means of connection to the seine. A second roller can be mounted on the crossbar to permit rolling engagement with the purse line. The frame is formed with a pair of elbows in the frame next to the first roller, creating a widening of the frame around the purse line passageway near the first roller. The frame can also be formed with a second pair of elbows in the frame next to the second roller, creating a widening of the frame around the purse line passageway near the second roller. Further, the frame can be formed with a third pair of elbows in the frame next to the second roller, creating a widening of the bridle line passageway.

### SUMMARY OF THE INVENTION

In the present invention, a purse ring is provided for engagement with the bridle line of a seine for pursing the seine with a purse line during deep-sea fishing operations in accordance with the claims which follow.

### BRIEF DESCRIPTION OF THE DRAWINGS

The novel features of this invention, as well as the invention itself, both as to its structure and its operation, will be best understood from the accompanying drawings, taken in conjunction with the accompanying description, in which similar reference characters refer to similar parts, and in which:
Fig. 1 is a top view of a fishing vessel engaged in seiner operations;
Fig. 2A is a top perspective view of the preferred embodiment of the purse ring engaged with a bridle line and purse line and showing the cable release arm in its closed configuration;
Fig. 2B is a top perspective view of the purse ring of Fig. 2A with the cable release arm in its open configuration;
Fig. 2C is a side perspective view of the purse ring of Fig. 2B;
Fig. 3A is a perspective view of the sleeve in the purse ring shown in Figs. 2A-2C;
Fig. 3B is a cross sectional view of the sleeve of Fig. 3A; and
Fig. 4 is a cross sectional view showing the connection between a roller and the frame of the purse ring.

### DESCRIPTION OF THE PREFERRED EMBODIMENTS

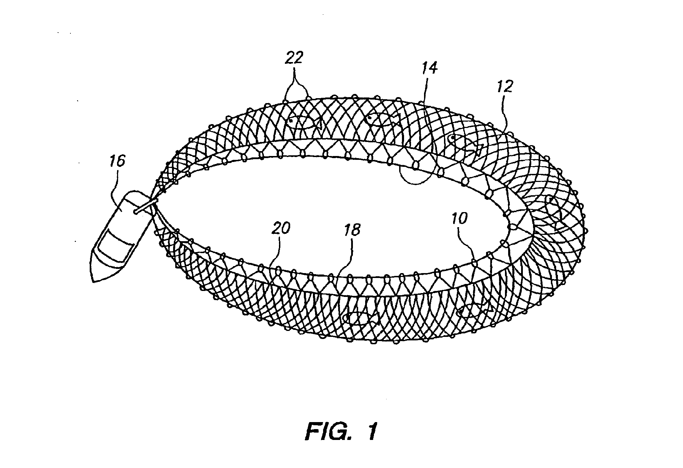

Fig. 1 shows a top overhead view of a purse seiner in operation using a plurality of purse rings designated 10. As shown, the purse rings 10 interconnect a seine 12 and a purse line 14 during the fishing operations conducted by a seiner vessel 16. For purposes of the present invention, it is to be appreciated that the purse line 14 may be either a cable, or a rope. More specifically, purse rings 10 are attached to the seine 12 with bridle lines 18 which are, in turn, attached to the seine 12 by a chain 20. Similar to the various embodiments for the purse line 14, the bridle lines 18 may be cables, ropes or chains. Further, floats 22 are connected to the seine 12 to provide buoyancy to maintain one side of the seine 12 at or near the water's surface. At the same time, the chain 20 and purse rings 10 act as sinkers to vertically orient the seine 12. As a result, the seine 12 is positioned to encircle schools of fish. When fish are encircled, they may be caught by pursing and retrieving the seine 12. This requires the interaction of purse line 14 with the plurality of purse rings 10.

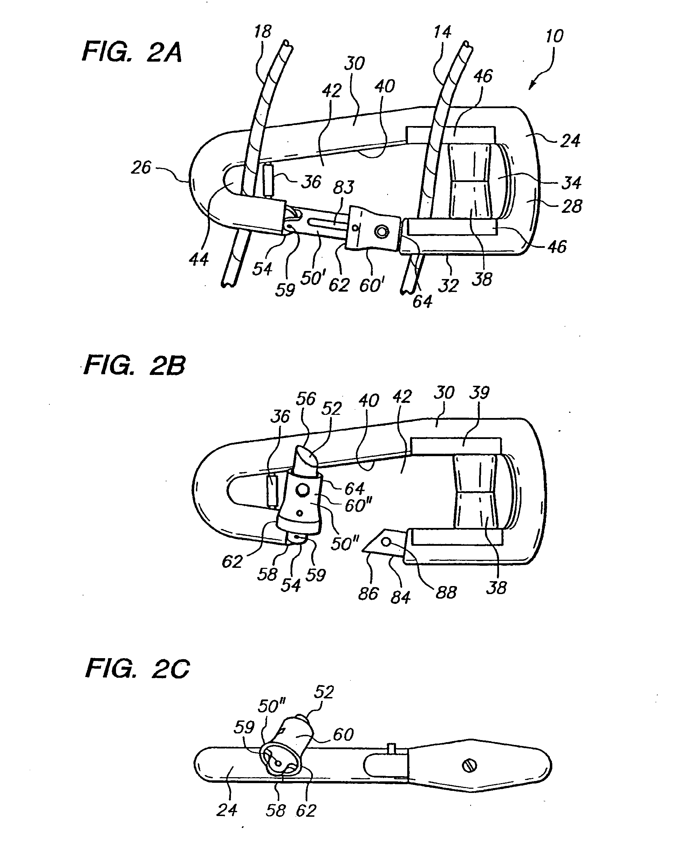

In Fig. 2A, a more detailed perspective view of an individual purse ring 10 is provided. As shown in Fig. 2, purse ring 10 comprises a frame 24 which may generally be of any shape that is efficient for connecting purse line 14 to bridle line 18. As depicted in Fig. 2, the preferred ring 10 is substantially oblong in shape. Also, purse ring 10 is preferably made of hardened steel and should be hard enough to resist frictional wear. Further, the elements of purse ring 10 should be chemically compatible with each other and with the materials of other components of seiner operations so as to minimize the effects of corrosion.

Still referring to Fig. 2A, it can be seen that frame 24 includes a proximal end 26 and a distal end 28. Further, two sides 30 and 32 interconnect the ends 26, 28 to define an aperture 34. As shown in Fig. 2A, the ring 10 includes a proximal roller 36 that interconnects the sides 30, 32 and bridges the aperture 34. Also, the ring 10 includes a distal roller 38 that further interconnects the sides 30, 32. With this structure, it can be seen that the sides 30, 32 and the rollers 36, 38 define a periphery 40 around a passageway 42 that receives the purse line 14. Further, the proximal end 26 and proximal roller 36 form an opening 44 for receiving the bridle line 18. Typically, during pursing operations, the purse line 14 rides along the distal roller 38 and the sides 30, 32 adjacent the distal roller 38. Therefore, the purse ring 10 is provided with hard facing 46 along both sides 30, 32 adjacent the distal roller 38. For purposes of the present invention, the hard facing 46 is comprised of at least one layer of a metal having improved strength and wear resistance such as Tube Alloy 240-O manufactured by McKay.

As shown in Fig. 2A, the proximal roller 36 is cylindrical. Further, the distal roller 38 is substantially cylindrical, but includes a slight taper toward its center to form a guide which facilitates a more efficient rolling contact of the distal roller 38 with purse line 14. Further, each roller 36, 38 is connected to frame 24 to provide for substantially free rotation and consequent reduced frictional wear during use.

In Fig. 2B, the illustrated embodiment of the purse ring 10 includes a side roller 39 mounted for rotation on the side 30. Structurally, the side roller 39 has an axis of rotation that is substantially perpendicular to the axis of rotation for the rollers 36, 38.

Cross-referencing Fig. 2A with Figs. 2B and 2C, the ring 10 is shown to include a canted cable release arm 50 along the side 32 of the frame 24. Structurally, the canted cable release arm 50 includes a pivot arm 52 which is formed with an end 54 and an end 56. As shown in Fig. 2C, the frame 24 includes an extension 58 that is canted with respect to the frame 24. Further, the pivot arm 52 is pivotably mounted to the extension 58 via a pin 59. With this engagement, the pivot arm 52 is able to clear the side 30 of the frame 24 as it pivots from the closed configuration 50' shown in Fig. 2A to the open configuration 50" shown in Figs. 2B and 2C. As shown, the pivot arm 52 is able to clear the side 30 of the frame 24 and pivot inwardly toward the proximal roller 36 until the pivot arm 52 is substantially parallel to the proximal roller 36. It will be appreciated that when pivot arm 52 is pivoted to the open configuration 50", it interrupts the periphery 40 to allow the purse line 14 to be moved into and out of the passageway 42.

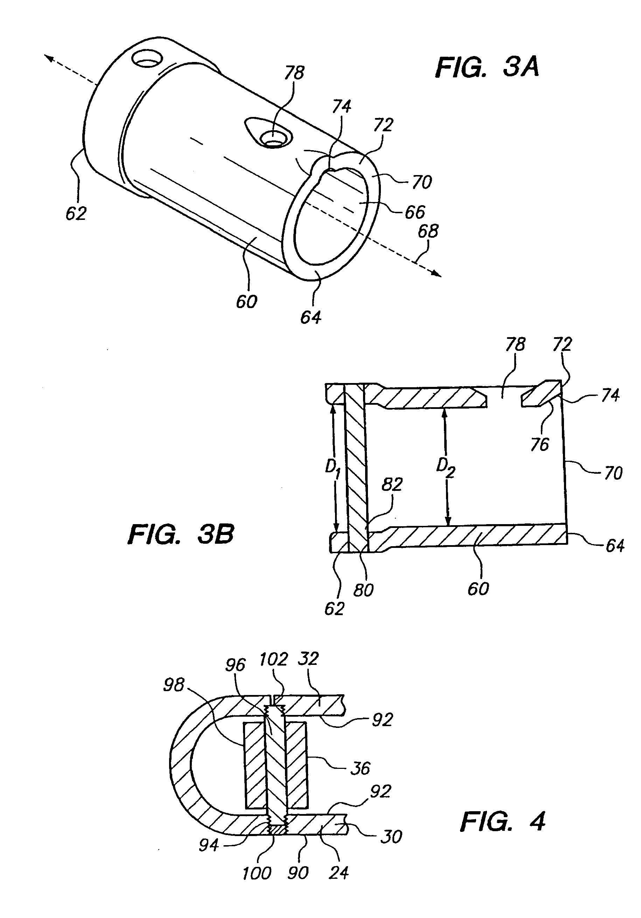

Further, the cable release arm 50 is provided with a sleeve 60 that has a flared proximal end 62 and a distal end 64. Referring to Figs. 3A and 3B, the structure of the sleeve 60 may be more easily understood. As illustrated, the sleeve 60 forms a channel 66 that extends along an axis 68 from the proximal end 62 to the distal end 64. As seen in Figs. 2A-2C, the channel 66 slidably receives the pivot member 52. As shown in Fig. 3A, at its distal end 64, the sleeve 60 has an end face 70 with a surface 72 that is substantially perpendicular to the axis 68. As shown, a notch 74 is formed in the sleeve 60 at the end face 70. Referring to Fig. 3B, it may be seen that the notch 74 includes a sloping surface 76 that forms an angle of about forty-five degrees with the end face surface 72.

As seen in Figs. 3A and 3B, the sleeve 60 also forms a lateral opening 78 to the channel 66. Importantly, this lateral opening 78 is axially aligned with the notch 74 as detailed below. Further, the sleeve 60 includes apertures 80 for receiving a bolt 82 to engage the sleeve 60 with the pivot arm 52 as shown in Figs. 2A-2C. Specifically, the pivot arm 52 forms a key guide 83 that slidingly receives the bolt 82. In Fig. 3B, it can be seen that the flared proximal end 62 of the sleeve 60 has an inner diameter D₁ while the rest of the sleeve 60 has an inner diameter D₂, with D₁ > D₂.

Referring back to Fig. 2A, the sleeve 60 is shown in an extended position 60' in which the distal end 64 engages the frame 24. Specifically, the frame 24 includes an abutment member 84 (shown in Fig. 2B) that is received within the channel 66 when the cable release arm 50 is in the closed configuration 50' and the sleeve 60 is in the extended position 60'. As a result, the sleeve 60 prevents pivotable movement of the cable release arm 50 when extended about the abutment member 84. Further, the ring 10 provides for the ability to lock the sleeve 60 in the extended position 60'.

As shown in Fig. 2B, the ring 10 provides a locking pin 86 on the abutment member 84. Specifically, the locking pin 86 is positioned in a slot 88 formed in the abutment member 84 and is biased outward from the slot 88. After the cable release arm 50 is closed, the sleeve 60 may be extended to engage the abutment member 84. During the extension of the sleeve 60, the sloping surface 76 of the notch 74 contacts and automatically depresses the locking pin 86. When the sleeve 60 is fully extended, the locking pin 86 reaches and extends through the lateral opening 78 in the sleeve 60. As a result, the locking pin 86 holds the sleeve 60 in the extended position 60'.

When the sleeve 60 is disengaged from the locking pin 86 and moved to its retracted position 60", the flared proximal end 62 of the sleeve 60 rides over the end 54 of the pivot arm 52. As a result, the sleeve 60 does not interfere with the pivoting capability of the pivot arm 52. This allows the pivot arm 52 to be pivoted to be substantially parallel to the proximal roller 36 and facilitates the removal of the purse line 14 from the passageway 42.

Referring now to Fig. 4, the connection of a roller 36 (or 38) to the frame 24 is illustrated. As shown, the frame 24 may be considered to have an outer face 90 and an inner face 92. For connection with the roller 36, a threaded bore 94 extends from the outer face 90 of a side 30 and through the inner face 92 of the side 30. Further, the threaded bore 94 passes through the inner face 92 of the other side 32 and stops within the side 32. Structurally, the roller 36 includes a threaded shaft 96 that is received within the bore 94 and remains fixed in place during use. Also, the roller 36 includes a bushing 98 that rotates about the fixed shaft 96. As shown, the ring 10 further includes a plug 100 that engages the threads to seal and prevent contamination at the shaft 96. Also, the frame 24 forms a drain aperture 102 that extends from the threaded bore 94 to the outer face 90 of the side 32.

While the particular purse ring as herein shown and disclosed in detail is fully capable of obtaining the objects and providing the advantages herein before stated, it is to be understood that it is merely illustrative of the presently preferred embodiments of the invention and that no limitations are intended to the details of construction or design herein shown other than as defined in the appended claims.

## Claims

1. A purse ring (10) engageable with the bridle line (18) of a seine (12) for pursing the seine with a purse line (14) during deep-sea fishing operations which comprises an oblong-shaped frame defining a plane and circumscribing an aperture, with the frame having a proximal end and a distal end interconnected by a first side and a second side, a distal roller (38) interconnecting the first side and the second side to bridge the aperture,
a proximal member interconnecting the first side and the second side to bridge the aperture, wherein the distal roller, the proximal member and the sides define a periphery around a passageway for receiving the purse line,
and wherein a hard facing is positioned on the first side adjacent the distal roller to reduce wear on the frame, **characterised in that** the purse ring further comprises:
a cable release arm (50) pivotally mounted as a portion of the second side, wherein the cable release arm is canted, pivotable and operable to Interrupt the periphery to move the purse line Into and out of the passageway, wherein the cable release arm Includes a pivot pin attached to the frame and a pivot member with a first end and a second end,
wherein the first end is pivotably attached to the pivot pin for movement of the pivot member transverse to the plane, 7,)
a sleeve (60) having a distal (64) end and a flared proximal end (62) and forming a channel therebetween for slidably receiving the pivot member to selectively engage the frame,
wherein the sleeve forms a lateral opening to the channel, wherein the sleeve has an extended position In which the distal end of the sleeve engages the frame to prevent movement of the pivot member, and wherein the sleeve has a retracted position in which the proximal end of the sleeve rides over the first end (54) of the pivot member (52), and a sleeve locking means (86) slidably attached to the frame to hold the sleeve In Its extended position, wherein the locking means comprises a slot defined by the frame, a pin (86) slidingly received by the slot (88) and extendable from the slot to engage the lateral opening In the sleeve, with the pin being biased to extend from the slot.

2. A purse ring according to claim 1, wherein the retracted position is where the proximal end of the sleeve rides over the first end of the pivot member,
and wherein the sleeve additionally forms a notch with a sloped surface from the lateral opening to the distal end, and wherein the sloped surface of the notch automatically depresses the pin to align the pin with the lateral opening when the sleeve is moved to the extended position.

3. A purse ring (10) as recited in claim 2 wherein the second side of the frame includes a hard facing adjacent the distal roller to reduce wear on the frame.

4. A purse ring (10) as recited in claim 2 further comprising a side roller mounted on the first side of the frame adjacent the distal roller to reduce friction between the purse ring and the purse line, with the side roller being transverse to the distal roller.

5. A purse ring (10) as recited in claim 2 wherein the sleeve defines a longitudinal axis, wherein the sleeve terminates at a distal end face forming a plane substantially perpendicular to the longitudinal axis, and wherein the notch is formed in the end face.

6. A purse ring (10) as recited in claim 2 wherein the first end of the pivot member has an outer diameter Dₚ, wherein the sleeve has a first Inner diameter D₁, and wherein the sleeve has a second Inner diameter D₂ along the flared portion, with D₂>D₁≥Dp.

7. A purse ring (10) as recited In claim 2 wherein the frame has an outer face and an Inner face and forms at least one threaded bore extending from the outer face through the Inner face of a selected Side and through the Inner face of the other side, wherein a drain aperture extends from the threaded bore to the outer face of the other side, wherein a selected roller Includes a threaded shaft that is received in the bore, and a bushing for spinning on the shaft, and wherein the ring is provided With a plug for sealing the shaft In the bore.

8. A purse ring (10) according to claim 1, wherein the retracted position of the sleeve is one in which the flared proximal end of the sleeve rides over the first end of the pivot member.

9. A purse ring (10) as recited in claim 8 wherein the sleeve forms a notch with a sloped surface from the lateral opening to the distal end, and wherein the sloped surface of the notch automatically depresses the pin to align the pin with the lateral opening when the sleeve is moved to the extended position.

10. A purse ring (10) as recited in claim 9 wherein the sleeve defines a longitudinal axis, wherein the sleeve terminates at a distal end face forming a plane substantially perpendicular to the longitudinal axis, and wherein the notch is formed in the end face.

11. A purse ring (10) as recited in claim 10 wherein the sloped surface of the notch forms a 45° angle with both the end face plane and the longitudinal axis.

12. A purse ring (10) as recited In claim 8 wherein the first end of the pivot member has an outer diameter Dp, wherein the sleeve has a first inner diameter Di, and wherein the sleeve has a second Inner diameter D₂ along the flared portion, with D₂>D₁≥Dp.

13. A purse ring (10) as recited in claim 12 wherein the frame has an outer face and an inner face and forms at least one threaded bore extending from the outer face through the inner face of a selected side and Into the Inner face of the other side, wherein a drain aperture extends from the threaded bore to the outer face of the other side, wherein the distal roller includes a threaded shaft that is received in the bore, and a bushing for spinning on the shaft, and wherein the ring is provided with a plug for sealing the shaft In the bore.

14. A purse ring (10) according to claim 1, wherein the proximal member is a roller, and wherein the sleeve further forms a notch with a sloped surface from the lateral opening to the distal end, wherein the sleeve has an extended position, wherein the retracted position of the sleeve is one in which the distal end disengages from the frame, and wherein the sloped surface of the notch automatically depresses the pin to align the pin with the lateral opening when the sleeve is moved to the extended position.

15. A purse ring (10) as recited in claim 14 further comprising a side roller mounted on the first side of the frame adjacent the distal roller to reduce friction between the purse ring and the purse line, with the side roller being transverse to the distal roller.

16. A purse ring (10) as recited in claim 14 wherein the frame has an outer face and an Inner face and forms at least one threaded bore extending from the outer face through the Inner face of a selected side and through the Inner face of the other side, wherein a drain aperture extends from the threaded bore to the outer face of the other side, wherein a selected roller Includes a threaded shaft that is received in the bore, and a bushing for spinning on the shaft, and wherein the ring is provided with a plug for sealing the shaft In the bore.

## Patentansprüche

1. Netzring (10), der mit der Netzleine (18) eines Ringwadennetzes (12) in Eingriff bringbar ist, um das Ringwadennetz während Betriebsabläufen beim Tiefseefischen mit einer Schnürleine (14) zusammenzuziehen, und der einen Bügel von länglicher Form umfasst, welcher eine Ebene bildet und eine Öffnung umschreibt, wobei der Bügel ein proximales Ende sowie ein distales Ende aufweist, die durch eine erste Seite und eine zweite Seite miteinander verbunden sind, wobei eine distale Laufrolle (38) die erste und zweite Seite miteinander verbindet, um die Öffnung zu überbrücken,
wobei ein proximales Element die erste Seite und die zweite Seite miteinander verbindet, um die Öffnung zu überbrücken, wobei die distale Laufrolle, das proximale Element und die Seiten einen Umfang um einen Durchgang zur Aufnahme der Schnürleine bilden,
und wobei ein Hartstoffbelag an der ersten Seite angrenzend an die distale Laufrolle angeordnet ist, um Verschleiß am Bügel zu reduzieren, **dadurch gekennzeichnet, dass** der Netzring darüber hinaus aufweist:
einen Seilfreigabeschenkel (50), der schwenkbar als ein Abschnitt der zweiten Seite angebracht ist, wobei der Seilfreigabeschenkel schräggestellt, schwenkbar und dahingehend funktionsfähig ist, den Umfang zu unterbrechen, um die Schnürleine in den Durchgang hinein bzw. aus diesem heraus zu bewegen, wobei der Seilfreigabeschenkel einen Schwenkzapfen, der am Bügel befestigt ist, und ein Schwenkelement mit einem ersten Ende und einem zweiten Ende aufweist, wobei das erste Ende für eine Bewegung des Schwenkelements quer zur Ebene schwenkbar am Schwenkzapfen befestigt ist,
eine Hülse (60), die ein distales Ende (64) und ein proximales Ende (62) hat und einen Kanal zwischen diesen bildet, um das zur selektiven Eingriffnahme am Bügel vorgesehene Schwenkelement gleitbar aufzunehmen, wobei die Hülse eine zum Kanal seitliche Öffnung bildet, wobei die Hülse eine ausgefahrene Position hat, in der das distale Ende der Hülse am Bügel angreift, um eine Bewegung des Schwenkelements zu unterbinden, und wobei die Hülse eine zurückgezogene Position hat, in der sich das proximale Ende der Hülse über das erste Ende (54) des Schwenkelements (52) schiebt, und eine Hülsenarretiereinrichtung (86), die gleitbar am Bügel befestigt ist, um die Hülse in ihrer ausgefahrenen Position zu halten, wobei die Arretiereinrichtung eine vom Bügel gebildete Aussparung aufweist, und einen Stift (86), der gleitend in der Aussparung (88) aufgenommen ist und aus der Aussparung herausragen kann, um in die seitliche Öffnung in der Hülse einzugreifen, wobei der Stift so vorgespannt ist, dass er aus der Aussparung herausragt.

2. Netzring nach Anspruch 1, wobei die zurückgezogene Position eine Position ist, in der sich das proximale Ende der Hülse über das erste Ende des Schwenkelements schiebt,
und wobei die Hülse zusätzlich eine Einkerbung mit einer Schrägfläche von der seitlichen Öffnung zum distalen Ende ausbildet, und wobei die Schrägfläche der Einkerbung den Stift automatisch eindrückt, um ihn mit der seitlichen Öffnung auszurichten, wenn die Hülse zur ausgefahrenen Position bewegt wird.

3. Netzring (10) nach Anspruch 2, wobei die zweite Seite des Bügels einen Hartstoffbelag angrenzend an die distale Laufrolle aufweist, um Verschleiß am Bügel zu reduzieren.

4. Netzring (10) nach Anspruch 2, darüber hinaus mit einer seitlichen Laufrolle, die an der ersten Seite des Bügels angrenzend an die distale Laufrolle angebracht ist, um Reibung zwischen dem Netzring und der Schnürleine zu reduzieren, wobei die seitliche Laufrolle quer zur distalen Laufrolle liegt.

5. Netzring (10) nach Anspruch 2, wobei die Hülse eine Längsachse bildet, wobei die Hülse an einer distalen Stirnfläche endet, die eine zur Längsachse im Wesentlichen senkrechte Ebene bildet, und wobei die Einkerbung in der Stirnfläche ausgebildet ist.

6. Netzring (10) nach Anspruch 2, wobei das erste Ende des Schwenkelements einen Außendurchmesser D_{P} hat, wobei die Hülse einen ersten Innendurchmesser D₁ hat, und wobei die Hülse einen zweiten Innendurchmesser D₂ entlang einem aufgeweiteten Abschnitt hat, wobei D₂>D_{1≥}D_{P}.

7. Netzring (10) nach Anspruch 2, wobei der Bügel eine Außenseite und eine Innenseite hat und mindestens eine Gewindebohrung ausbildet, die von der Außenseite durch die Innenseite einer ausgewählten Seite und durch die Innenseite der anderen Seite verläuft, wobei sich eine Ablauföffnung von der Gewindebohrung zur Außenseite der anderen Seite erstreckt, wobei eine ausgewählte Laufrolle einen Gewindezapfen umfasst, der in der Bohrung aufgenommen ist, und eine Lagerbüchse zur Drehung am Zapfen, und wobei der Ring mit einem Stopfen versehen ist, um den Zapfen in der Bohrung abzudichten.

8. Netzring (10) nach Anspruch 1, wobei die zurückgezogene Position der Hülse eine Position ist, in der sich das aufgeweitete proximale Ende der Hülse über das erste Ende des Schwenkelements schiebt.

9. Netzring (10) nach Anspruch 8, wobei die Hülse eine Einkerbung mit einer Schrägfläche von der seitlichen Öffnung zum distalen Ende ausbildet, und wobei die Schrägfläche der Einkerbung den Stift automatisch eindrückt, um ihn mit der seitlichen Öffnung auszurichten, wenn die Hülse zur ausgefahrenen Position bewegt wird.

10. Netzring (10) nach Anspruch 9, wobei die Hülse eine Längsachse bildet, wobei die Hülse an einer distalen Stirnfläche endet, die eine zur Längsachse im Wesentlichen senkrechte Ebene bildet, und wobei die Einkerbung in der Stirnfläche ausgebildet ist.

11. Netzring (10) nach Anspruch 10, wobei die Schrägfläche der Einkerbung einen 45°-Winkel mit der Ebene der Stirnfläche und mit der Längsachse bildet.

12. Netzring (10) Anspruch 8, wobei das erste Ende des Schwenkelements einen Außendurchmesser D_{P} hat, wobei die Hülse einen ersten Innendurchmesser D₁ hat, und wobei die Hülse einen zweiten Innendurchmesser D₂ entlang dem aufgeweiteten Abschnitt hat, mit D₂>D₁≥D_{P}.

13. Netzring (10) nach Anspruch 12, wobei der Bügel eine Außenseite und eine Innenseite hat und mindestens eine Gewindebohrung ausbildet, die von der Außenseite durch die Innenseite einer ausgewählten Seite und in die Innenseite der anderen Seite verläuft, wobei sich eine Ablauföffnung von der Gewindebohrung zur Außenseite der anderen Seite erstreckt, wobei die distale Laufrolle einen Gewindezapfen umfasst, der in der Bohrung aufgenommen ist, und eine Lagerbüchse zur Drehung am Zapfen, und wobei der Ring mit einem Stopfen versehen ist, um den Zapfen in der Bohrung abzudichten.

14. Netzring (10) nach Anspruch 1, wobei das proximale Element eine Laufrolle ist, und wobei die Hülse darüber hinaus eine Einkerbung mit einer Schrägfläche von der seitlichen Öffnung zum distalen Ende ausbildet, wobei die Hülse eine ausgefahrene Position hat, wobei die zurückgezogene Position der Hülse eine Position ist, in der sich das distale Ende vom Bügel löst, und wobei die Schrägfläche der Einkerbung den Stift automatisch eindrückt, um ihn mit der seitlichen Öffnung auszurichten, wenn die Hülse zur ausgefahrenen Position bewegt wird.

15. Netzring (10) nach Anspruch 14, darüber hinaus mit einer seitlichen Laufrolle, die an der ersten Seite des Bügels angrenzend an die distale Laufrolle angebracht ist, um Reibung zwischen dem Netzring und der Schnürleine zu reduzieren, wobei die seitliche Laufrolle quer zur distalen Laufrolle liegt.

16. Netzring (10) nach Anspruch 14, wobei der Bügel eine Außenseite und eine Innenseite hat und mindestens eine Gewindebohrung ausbildet, die von der Außenseite durch die Innenseite einer ausgewählten Seite und durch die Innenseite der anderen Seite verläuft, wobei sich eine Ablauföffnung von der Gewindebohrung zur Außenseite der anderen Seite erstreckt, wobei eine ausgewählte Laufrolle einen Gewindezapfen umfasst, der in der Bohrung aufgenommen ist, und eine Lagerbüchse zur Drehung am Zapfen, und wobei der Ring mit einem Stopfen versehen ist, um den Zapfen in der Bohrung abzudichten.

## Revendications

1. Anneau de coulisse (10) pouvant s'engager avec la ligne de bride (18) d'une senne (12) pour faire coulisser la senne avec une ligne de coulisse (14) pendant des opérations de pêche en haute mer qui comprend un cadre de forme oblongue définissant un plan et circonscrivant une ouverture, le cadre ayant une extrémité proximale et une extrémité distale interconnectées par un premier côté et un second côté, un rouleau distal (38) interconnectant le premier côté et le second côté pour franchir l'ouverture,
un élément proximal interconnectant le premier côté et le second côté pour franchir l'ouverture, dans lequel le rouleau distal, l'élément proximal et les côtés définissent une périphérie autour d'un passage pour recevoir la ligne de coulisse,
et dans lequel un surfaçage de renfort est positionné sur le premier côté adjacent au rouleau distal pour réduire l'usure sur le cadre, **caractérisé en ce que** l'anneau de coulisse comprend en outre :
un bras de libération de câble (50) monté de manière pivotante comme une partie du second côté, dans lequel le bras de libération de câble est biseauté, peut pivoter et être actionné pour interrompre la périphérie pour déplacer la ligne de coulisse dans le passage et à l'extérieur de celui-ci, dans lequel le bras de libération de câble inclut une cheville de pivotement attachée au cadre et un élément de pivotement avec une première extrémité et une seconde extrémité, dans lequel la première extrémité est attachée de manière pivotante à la cheville de pivotement pour un mouvement de l'élément de pivotement transversalement au plan,
une douille (60) ayant une extrémité distale (64) et une extrémité proximale évasée (62) et formant un canal entre celles-ci pour recevoir l'élément de pivotement de manière coulissante pour s'engager sélectivement avec le cadre, dans lequel la douille forme une ouverture latérale vers le canal, dans lequel la douille a une position étendue dans laquelle l'extrémité distale de la douille s'engage avec le cadre pour empêcher un mouvement de l'élément de pivotement, et dans lequel la douille a une position rétractée dans laquelle l'extrémité proximale de la douille passe au-dessus de la première extrémité (54) de l'élément de pivotement (52) ; et des moyens de blocage de douille (86) attachés de manière coulissante au cadre pour maintenir la douille dans sa position étendue, dans lequel les moyens de blocage comprennent une fente définie par le cadre, une cheville (86) reçue de manière coulissante par la fente (88) et extensible à partir de la fente pour s'engager avec l'ouverture latérale dans la douille, la cheville étant biaisée pour s'étendre à partir de la fente.

2. Anneau de coulisse selon la revendication 1, dans lequel la position rétractée est où l'extrémité proximale de la douille passe au-dessus de la première extrémité de l'élément de pivotement,
et dans lequel la douille forme de plus une encoche avec une surface inclinée de l'ouverture latérale à l'extrémité distale, et dans lequel la surface inclinée de l'encoche enfonce automatiquement la cheville pour aligner la cheville avec l'ouverture latérale lorsque la douille est amenée à la position étendue.

3. Anneau de coulisse (10) tel qu'exposé dans la revendication 2 dans lequel le second côté du cadre inclut un surfaçage de renfort adjacent au rouleau distal pour réduire l'usure sur le cadre.

4. Anneau de coulisse (10) tel qu'exposé dans la revendication 2 comprenant en outre un rouleau latéral monté sur le premier côté du cadre, adjacent au rouleau distal pour réduire le frottement entre l'anneau de coulisse et la ligne de coulisse, le rouleau latéral étant transversal au rouleau distal.

5. Anneau de coulisse (10) tel qu'exposé dans la revendication 2 dans lequel la douille définit un axe longitudinal, dans lequel la douille se termine sur une face d'extrémité distale formant un plan sensiblement perpendiculaire à l'axe longitudinal, et dans lequel l'encoche est formée dans la face d'extrémité.

6. Anneau de coulisse (10) tel qu'exposé dans la revendication 2 dans lequel la première extrémité de l'élément de pivotement a un diamètre extérieur Dₚ, dans lequel la douille a un premier diamètre intérieur D₁, et dans lequel la douille a un second diamètre intérieur D₂ le long de la partie évasée, avec D₂ > D₁ ≥ Dₚ.

7. Anneau de coulisse (10) tel qu'exposé dans la revendication 2 dans lequel le cadre a une face extérieure et une face intérieure et forme au moins un alésage fileté s'étendant à partir de la face extérieure à travers la face intérieure d'un côté sélectionné et à travers la face intérieure de l'autre côté, dans lequel une ouverture d'évacuation s'étend à partir de l'alésage fileté jusqu'à la face extérieure de l'autre côté, dans lequel un rouleau sélectionné inclut un arbre fileté qui est reçu dans l'alésage, et une bague pour une rotation sur l'arbre, et dans lequel l'anneau est muni d'un bouchon pour rendre l'arbre étanche dans l'alésage.

8. Anneau de coulisse (10) selon la revendication 1, dans lequel la position rétractée de la douille est une position dans laquelle l'extrémité proximale évasée de la douille passe au-dessus de la première extrémité de l'élément de pivotement.

9. Anneau de coulisse (10) tel qu'exposé dans la revendication 8 dans lequel la douille forme une encoche avec une surface inclinée de l'ouverture latérale à l'extrémité distale, et dans lequel la surface inclinée de l'encoche enfonce automatiquement la cheville pour aligner la cheville avec l'ouverture latérale lorsque la douille est amenée à la position étendue.

10. Anneau de coulisse (10) tel qu'exposé dans la revendication 9 dans lequel la douille définit un axe longitudinal, dans lequel la douille se termine sur une face d'extrémité distale formant un plan sensiblement perpendiculaire à l'axe longitudinal, et dans lequel l'encoche est formée dans la face d'extrémité.

11. Anneau de coulisse (10) tel qu'exposé dans la revendication 10 dans lequel la surface inclinée de l'encoche forme un angle à 45° à la fois avec le plan de face d'extrémité et l'axe longitudinal.

12. Anneau de coulisse (10) tel qu'exposé dans la revendication 8 dans lequel la première extrémité de l'élément de pivotement a un diamètre extérieur Dₚ, dans lequel la douille a un premier diamètre intérieur D₁, et dans lequel la douille a un second diamètre intérieur D₂ le long de la partie évasée, avec D₂ > D₁ ≥ Dₚ.

13. Anneau de coulisse (10) tel qu'exposé dans la revendication 12 dans lequel le cadre a une face extérieure et une face intérieure et forme au moins un alésage fileté s'étendant à partir de la face extérieure à travers la face intérieure d'un côté sélectionné et, dans la face intérieure de l'autre côté, dans lequel une ouverture d'évacuation s'étend de l'alésage fileté à la face extérieure de l'autre côté, dans lequel le rouleau distal inclut un arbre fileté qui est reçu dans l'alésage, et une bague pour une rotation sur l'arbre, et dans lequel l'anneau est muni d'un bouchon pour rendre l'arbre étanche dans l'alésage.

14. Anneau de coulisse (10) selon la revendication 1, dans lequel l'élément proximal est un rouleau, et dans lequel la douille forme en outre une encoche avec une surface inclinée de l'ouverture latérale à l'extrémité distale, dans lequel la douille a une position étendue, dans lequel la position rétractée de la douille est une position dans laquelle l'extrémité distale se désengage du cadre, et dans lequel la surface inclinée de l'encoche enfonce automatiquement la cheville pour aligner la cheville avec l'ouverture latérale lorsque la douille est amenée à la position étendue.

15. Anneau de coulisse (10) tel qu'exposé dans la revendication 14 comprenant en outre un rouleau latéral monté sur le premier côté du cadre, adjacent au rouleau distal pour réduire le frottement entre l'anneau de coulisse et la ligne de coulisse, le rouleau latéral étant transversal au rouleau distal.

16. Anneau de coulisse (10) tel qu'exposé dans la revendication 14 dans lequel le cadre a une face extérieure et une face intérieure et forme au moins un alésage fileté s'étendant à partir de la face extérieure à travers la face intérieure d'un côté sélectionné et à travers la face intérieure de l'autre côté, dans lequel une ouverture d'évacuation s'étend de l'alésage fileté à la face extérieure de l'autre côté, dans lequel un rouleau sélectionné inclut un arbre fileté qui est reçu dans l'alésage, et une bague pour une rotation sur l'arbre, et dans lequel l'anneau est muni d'un bouchon pour rendre l'arbre étanche dans l'alésage.
